# FASCICULE DE BREVET EUROPEEN

(11) **EP 0 349 445 B1**
(45) Date de publication et mention de la délivrance du brevet: **29.09.1993**
(21) Numéro de dépôt: 89420224.1
(22) Date de dépôt: 20.06.1989
(51) Int. Cl.: H01T 1/14, H01H 77/10

(54) **Dispositif de protection contre les effets des impulsions électromagnétiques nucléaires**
Vorrichtung zum Schutz gegen Einwirkungen eines elektromagnetischen Nuklearimpulses
Protection device against the effects of electromagnetic nuclear pulses

(30) Priorité: 28.06.1988 FR 8808792
(43) Date de publication de la demande: 03.01.1990
(73) Titulaire: MERLIN GERIN, F-38240 Meylan (FR)
(72) Inventeur: Broyde, Frédéric, F-38050 Grenoble Cedex (FR)
(74) Mandataire: Hecké, Gérard

(56) Documents cités:
- EP-A- 0 059 118
- EP-A- 0 110 070
- CH-A- 152 067
- DE-A- 3 515 204
- FR-A- 2 514 194

## Description

L'invention est relative à un dispositif de protection d'une ligne d'énergie électrique basse tension contre les surtensions impulsionnelles dues notamment aux impulsions électromagnétiques d'origine nucléaire, comprenant un éclateur de dérivation desdites surtensions, et un moyen de coupure inséré dans la ligne en amont de l'éclateur, le terme amont étant défini par rapport au sens de propagation du courant, pour assurer la limitation et la coupure du courant de court-circuit alimentant l'éclateur.

Des dispositifs de protection du genre mentionné, évitent la destruction ou la perturbation des installations électriques, notamment des systèmes électroniques de ces installations lors d'un coup de foudre. Lors d'une surtension impulsionnelle, l'éclateur s'amorce rapidement en dérivant et en écrêtant la surtension pour ne laisser subsister qu'un transitoire supportable par l'installation à protéger. L'amorçage de l'éclateur provoque un court-circuit qui est éliminé par un fusible monté en amont de l'éclateur. L'interruption de l'alimentation et la nécessité d'une intervention sur place sont particulièrement gênantes.

Il a déjà été proposé une combinaison d'un éclateur de dérivation des surtensions et d'une varistance qui limite le courant parcourant l'éclateur. L'alimentation de charge est rétablie automatiquement lors de l'extinction de l'éclateur, mais cette charge voit une tension qui est la somme de la tension aux bornes de la varistance et de la tension d'arc dans l'éclateur. Cette tension peut atteindre des valeurs inadmissibles pouvant par exemple dépasser 2000 volts pour un courant de 10 kA. Des courants de cette importance peuvent être induits dans une ligne basse tension par le champ électromagnétique engendré par une explosion nucléaire.

CH-A-152 067 décrit un dispositif de protection d'une ligne d'énergie électrique basse tension contre les surtensions impulsionnelles, comprenant un éclateur de dérivation desdites surtensions et un moyen de coupure inséré dans la ligne en amont de l'éclateur pour assurer la limitation et la coupure du courant de court-circuit alimentant l'éclateur, ledit éclateur étant un éclateur à gaz agencé pour s'amorcer après quelques millisecondes, ledit moyen de coupure étant un contact électrique à commande rapide d'ouverture pour limiter la durée de passage du courant dans l'éclateur, lequel contact reste ouvert pendant une durée d'au moins 2 millisecondes, suffisante au désamorçage de l'éclateur.

La présente invention a pour but de permettre la réalisation d'un dispositif de protection contre les surtensions impulsionnelles dues aux impulsions électromagnétiques d'origine nucléaire ou à toute autre cause, telle que la foudre, tout en maintenant l'alimentation de la charge.

Le dispositif de protection selon l'invention est caractérisé en ce que ledit éclateur est un éclateur à gaz agencé pour s'amorcer après quelques nanosecondes et que ledit moyen de coupure est un contact électrique à commande rapide d'ouverture pour limiter la durée de passage du courant dans l'éclateur à quelques millisecondes, lequel contact reste ouvert pendant une durée d'au moins 2 millisecondes, suffisante au désamorçage de l'éclateur, et de moins de 5 millisecondes afin de ne pas perturber l'alimentation des charges par ladite ligne.

L'éclateur du type rapide s'amorce en quelques nanosecondes et l'équipement à protéger ne voit qu'une tension qui est principalement la tension d'arc de l'éclateur, de quelques dizaines de volts. Pour une ligne d'un réseau de 380 volts, le seuil de l'éclateur peut être fixé par exemple à environ 800 volts. Après l'allumage de l'éclateur, celui-ci est parcouru par le courant associé à la perturbation augmentée du courant dû à la source d'énergie basse tension, ce dernier courant évoluant vers une valeur voisine du courant de court-circuit de l'installation. Ce courant de court-circuit traverse le contact électrique à commande rapide d'ouverture et provoque l'ouverture de ce contact en un temps inférieur à quelques millisecondes suffisamment faible pour éviter la destruction de l'éclateur. La valeur du courant traversant l'éclateur est limitée par l'ouverture rapide du contact et dès l'interruption de ce courant, l'arc dans l'éclateur s'éteint. Le contact limiteur est agencé pour rester ouvert pendant une durée d'au moins 2 millisecondes permettant à l'éclateur de se refroidir suffisamment pour éviter un réamorçage sur la tension nominale de l'installation lors de la refermeture du contact électrique. La durée d'interruption de l'alimentation qui correspond sensiblement à la durée d'ouverture du contact électrique est choisie suffisamment faible pour ne pas perturber notablement le fonctionnement de l'équipement protégé.

L'ouverture rapide du contact électrique peut être commandée par tout moyen approprié, par exemple par une bobine à noyau plongeur, un dispositif préférentiel faisant usage des forces électrodynamiques de répulsion engendrées par un conducteur disposé à proximité du contact mobile et parcouru par un courant de sens opposé. De tels limiteurs de courant à répulsion électrodynamique des contacts sont bien connus des spécialistes, et par exemple décrit dans le brevet français n° 2514194.

Le contact limiteur doit être capable de couper le courant de court-circuit de l'installation et il ne comporte pas de système d'ancrage du contact en position ouvert, ceci pour autoriser la refermeture automatique de ce contact sous l'action d'un ressort de rappel dès la disparition des forces électrodynamiques de répulsion, en l'occurrence dès la coupure du courant. La durée d'ouverture du contact limiteur est déterminée par les caractéristiques constructives et elle peut éventuellement être adaptée par des systèmes ralentisseurs, par exemple à masselotte, d'un type bien connu des spécialistes.

La protection par le dispositif selon l'invention n'est pas limitée aux surtensions impulsionnelles d'origine nucléaire mais elle s'étend entre autre aux effets de la foudre.

D'autres avantages et caractéristiques ressortiront plus clairement de la description qui va suivre, d'un mode de mise en oeuvre de l'invention, donné à titre d'exemple non limitatif et représenté au dessin annexé dans lequel:
- la figure 1 représente le schéma électrique d'un dispositif de protection selon l'invention;
- la figure 2 est une vue en coupe du contact limiteur représenté à la figure 1;
- la figure 3 montre les courbes de variations des tensions et des courants en fonction du temps.

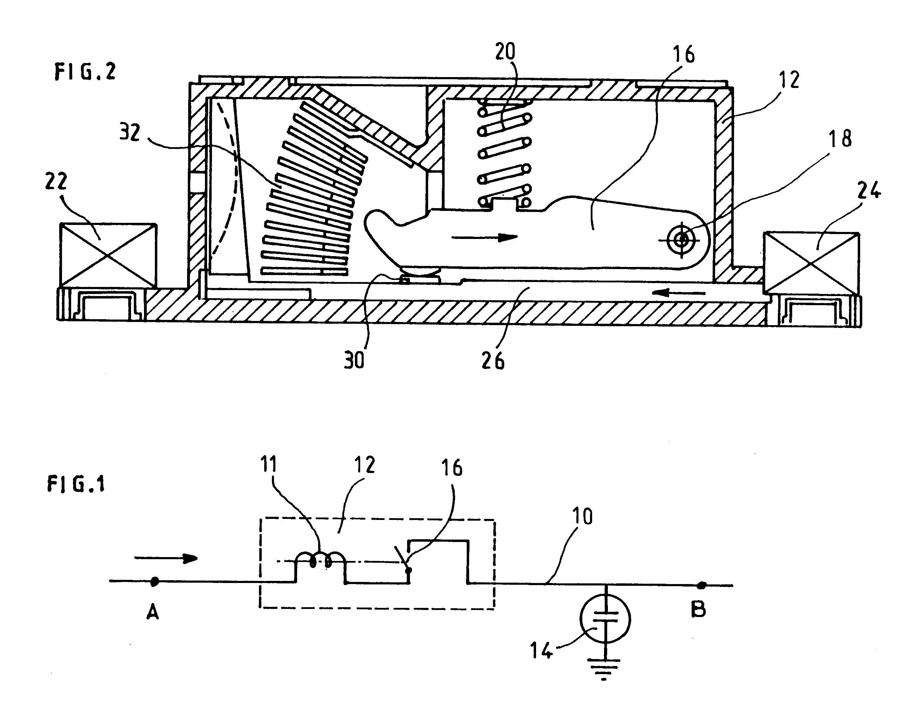

Sur les figures une ligne 10 d'énergie électrique basse tension relie une source d'énergie (non représentée) à une charge (non représentée) ou équipement, cette ligne pouvant être un conducteur d'un réseau triphasé de 380 volts. La ligne 10 est équipée d'un dispositif de protection contre les surtensions impulsionnelles, constitué d'un contact limiteur 12 inséré en série dans la ligne 10 et un éclateur à gaz 14 inséré entre la ligne 10 et la terre ou la masse d'une cage de Faraday. L'éclateur 14 est disposé en aval du contact limiteur 12 par rapport au sens d'écoulement du courant représenté par une flèche sur la figure 1. Le contact limiteur 12 est constitué dans le mode de mise en oeuvre représenté par la figure 1 par une bobine 11, et un contact mobile 16 connectés électriquement en série dans la ligne 10. Le contact mobile 16 est normalement en position de fermeture mais il est déplacé rapidement en position d'ouverture sous l'action de la bobine 11 lorsque le courant parcourant cette dernière dépasse un seuil prédéterminé. Un ressort de rappel non représenté sollicite le contact mobile 16 en position de fermeture de manière à refermer le circuit automatiquement dès que le courant est coupé. Le contact limiteur 12 est agencé pour s'ouvrir en un temps "t1" de l'ordre de la milliseconde après l'apparition d'un courant de court-circuit et à rester en position ouvert pendant une durée "t2" comprise entre 2 et 5 millisecondes. L'éclateur à gaz 14 s'amorce en quelques nanosecondes après l'apparition de la surtension impulsionnelle pour dériver cette surtension et limiter la tension à la sortie B du dispositif de protection à une valeur voisine de la tension d'arc de l'éclateur 14, par exemple de 40 volts.

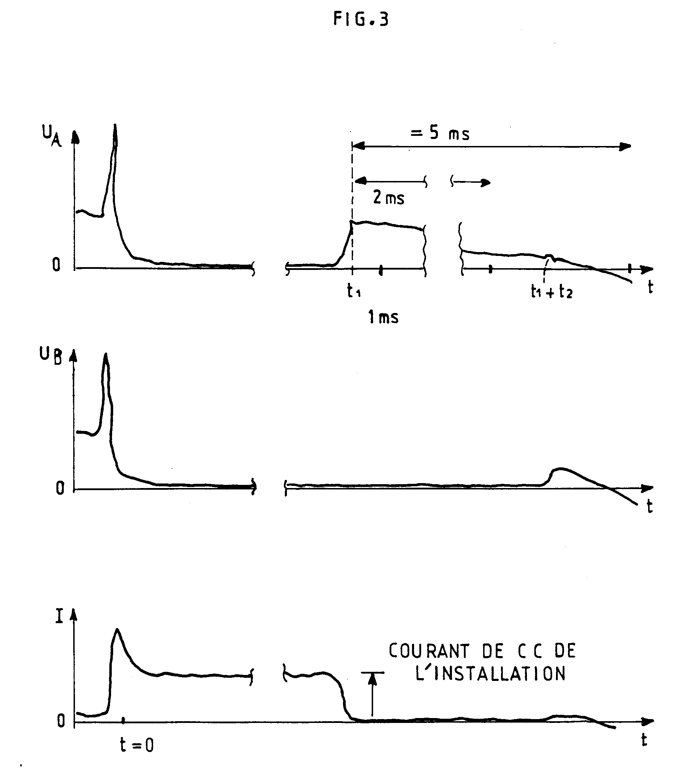

Le fonctionnement du dispositif de protection est décrit ci-après plus particulièrement en référence à la figure 3, dans laquelle la première courbe représente la tension U-A au point A d'entrée du dispositif de protection, la deuxième courbe, la tension U-B à la sortie B du dispositif de protection, et la troisième courbe qui représente l'intensité du courant I parcourant le dispositif:

En fonctionnement normal, la tension U-A à l'entrée du dispositif et la tension U-B à la sortie du dispositif sont égales à la tension nominale de la ligne par exemple de 380 volts et le courant I correspond au courant d'alimentation de la charge. A l'instant "t" intervient une surtension impulsionnelle provoquant une augmentation rapide des tensions U-A et U-B et l'amorçage de l'éclateur 14 après quelques nanosecondes. Sur les courbes, l'amorçage de l'éclateur 14 coïncide avec l'apparition de la surtension, l'échelle de représentation étant trop petite. Dès l'amorçage de l'éclateur 14, les tensions U-A et U-B chutent à une valeur très faible correspondant à la tension d'arc de l'éclateur, par exemple de 40 volts. Le courant est dérivé par l'éclateur 14 et il s'établit à une valeur correspondant au courant de court-circuit de l'installation augmenté du courant résultant de la surtension. Ce courant traverse la bobine 11 qui provoque l'ouverture du contact mobile 16 après un temps "t1" inférieur à une milliseconde. Le temps d'amorçage de l'éclateur 14 étant de l'ordre des nanosecondes, ce temps est négligeable et il est possible de définir le temps "t1" d'ouverture du contact limiteur 16 par rapport à l'apparition de la surtension impulsionnelle ou par rapport à l'amorçage de l'éclateur 14. Dès l'ouverture du contact mobile 16 au temps "t1", le courant est coupé et la tension U-B à la sortie du dispositif devient nulle. Au temps "t1" + "t2", "t2" étant compris entre 2 et 5 millisecondes, le contact mobile 16 se referme et rétablit l'alimentation, l'éclateur 14 ayant eu le temps de se refroidir de façon à éviter tout réamorçage sous la tension nominale. La surtension impulsionnelle dont la durée est très faible ayant bien entendu disparu.

En se référant à la figure 2, on voit une variante de réalisation du contact limiteur 12 d'un type bien connu des spécialistes. Le contact mobile 16 est un contact pivotant monté à rotation sur un axe 18 et sollicité en position de fermeture par un ressort 20. Le contact limiteur comporte une borne d'entrée 22 connectée électriquement par un conducteur non représenté à l'axe 18, et une borne de sortie 24 connectée par un conducteur fixe 26 à un contact fixe 30. Le conducteur 26 s'étend parallèlement au contact mobile 16 de manière à être traversé par un courant représenté par la flèche sur la figure, de sens opposé à celui parcourant le contact mobile 16.

Il est facile de voir que les courants de sens opposés engendrent un effet de répulsion vers la position d'ouverture du contact mobile 16 dès que cette force dépasse la force du ressort de rappel 20. Une chambre de coupure à tôles de désionisation 32 est associée aux contacts pour provoquer l'extinction rapide de l'arc. Dès l'interruption du courant par l'extinction de l'arc dans la chambre 32, la force électrodynamique de répulsion disparaît et le contact mobile 16 est repoussé en position de fermeture par le ressort de rappel 20. Le fonctionnement est bien entendu identique à celui décrit ci-dessus, en référence à la figure 1 et il est inutile de le rappeler. Il est clair que le temps d'ouverture du contact mobile 16 peut être modifié par l'adjonction d'un dispositif ralentisseur, par exemple du type à masselotte.

Il est facile de voir que l'équipement protégé ne voit qu'une surtension de très courte durée correspondant à la partie de la perturbation qui précède l'allumage de l'éclateur. L'interruption de l'alimentation est limitée à quelques millisecondes correspondant au temps d'ouverture du contact limiteur et on peut prévoir des mesures permettant à l'équipement alimenté, de ne pas être perturbé par cette courte interruption de l'alimentation. Le dispositif est particulièrement simple et d'un coût limité, et son fonctionnement est entièrement automatique. Il assure une protection efficace sans interruption notable de l'alimentation contre toutes les surtensions impulsionnelles, notamment celles résultant d'impulsions électromagnétiques d'origine nucléaire.

## Revendications

1. Dispositif de protection d'une ligne (10) d'énergie électrique basse tension contre les surtensions impulsionnelles dues notamment aux impulsions électromagnétiques d'origine nucléaire, comprenant un éclateur (14) de dérivation desdites surtensions et un moyen de coupure (16) inséré dans la ligne en amont de l'éclateur (14), le terme amont étant défini par rapport au sens d'écoulement du courant, pour assurer la limitation et la coupure du courant de court-circuit alimentant l'éclateur, dispositif dans lequel ledit éclateur (14) est un éclateur à gaz agencé pour s'amorcer après quelques nanosecondes et que ledit moyen de coupure est un contact électrique (16) à commande rapide d'ouverture pour limiter la durée de passage du courant dans l'éclateur à quelques millisecondes, lequel contact étant agencé pour rester ouvert pendant une durée d'au moins 2 millisecondes, suffisante au désamorçage de l'éclateur (14) et de moins de 5 millisecondes afin de ne pas perturber l'alimentation des charges par ladite ligne.

2. Dispositif selon la revendication 1, caractérisé en ce que ledit éclateur à gaz (14) est connecté entre la ligne (10) et la terre en amont de la charge.

3. Dispositif selon la revendication 1 ou 2, caractérisé en ce que ledit contact électrique (16) est sollicité en position de fermeture par un ressort (20) et est soumis à des forces électrodynamiques de répulsion déplaçant le contact en position d'ouverture à l'encontre de la force du ressort lorsque le courant parcourant le contact dépasse un seuil prédéterminé, le ressort ramenant le contact en position de fermeture dès la coupure du courant.

## Claims

1. A device for protection of a low voltage electrical power line (10) against impulse voltage surges due notably to electromagnetic impulses of nuclear origin, comprising a discharge arrestor (14) for branching off said voltage surges, and a breaking means (16) connected in the line up-line from the discharge arrestor (14), the term up-line being defined with respect to the direction of current propagation, to perform limiting and breaking of the short-circuit current supplying the discharge arrestor, a device wherein said discharge arrestor (14) is a gas discharge arrestor arranged to turn on after a few nanoseconds and that said breaking means is an electrical contact (16) with high-speed opening control to limit the time the current flows in the discharge arrestor to a few milliseconds, which contact being arranged to remain open for a duration of at least 2 milliseconds, sufficient for turn-off of the discharge arrestor (14), and of less than 5 milliseconds so as not to disturb the power supply to the loads by said line.

2. The device according to claim 1, characterized in that said gas discharge arrestor (14) is connected between the line (10) and earth up-line from the load.

3. The device according to claim 1 or 2, characterized in that said electrical contact (16) is urged to the closed position by a spring (20) and is subjected to electrodynamic repulsion forces moving the contact to the open position against the force of the spring when the current flowing in the contact exceeds a preset threshold, the spring returning the contact to the closed position as soon as the current is broken.

## Patentansprüche

1. Einrichtung zum Schutz einer elektrischen Niederspannungsleitung (10) gegen Impuls-Überspannungen, insbesondere aufgrund von elektromagnetischen Kernimpulsen, die eine Funkenstrecke (14) zur Ableitung der genannten Überspannungen sowie eine auf der Einspeiseseite der Funkenstrecke (14) in den Leitungskreis eingesetzte Abschaltvorrichtung (16) umfaßt, wobei der Begriff "Einspeiseseite" auf die Energieflußrichtung bezogen ist, um die Begrenzung und Abschaltung des die Funkenstrecke speisenden Kurzschlußstroms zu gewährleisten, wobei die genannte Funkenstrecke (14) der Schutzeinrichtung als gasgefüllte Funkenstrecke ausgeführt ist, die so ausgelegt ist, daß ihre Durchzündung nach einigen Nanosekunden erfolgt, daß die genannte Abschaltvorrichtung aus einem schnellöffnenden elektrischen Kontakt (16) besteht, um die Dauer des Stromflusses in der Funkenstrecke auf einige Millisekunden zu begrenzen, und der genannte Kontakt so ausgelegt ist, daß er über eine für das Löschen der Funkenstrecke (14) ausreichend lange Zeitdauer von mindestens 2 Millisekunden und weniger als 5 Millisekunden geöffnet bleibt, um die Stromversorgung der über die genannte Leitung gespeisten Last nicht zu beeinträchtigen.

2. Einrichtung nach Anspruch 1, dadurch gekennzeichnet, daß die genannte gasgefüllte Funkenstrecke (14) auf der Einspeiseseite der Last zwischen die Leitung (10) und Erde geschaltet ist.

3. Einrichtung nach Anspruch 1 oder 2, dadurch gekennzeichnet, daß der genannte elektrische Kontakt (16) in Richtung der Einschaltstellung durch eine Feder (20) beaufschlagt wird und elektrodynamischen Abstoßungskräften ausgesetzt ist, die den Kontakt gegen die Kraftwirkung der Feder in die Ausschaltstellung drücken, wenn der über den Kontakt fließende Strom einen bestimmten Schwellwert überschreitet, wobei die Feder den Kontakt nach der Abschaltung des Stroms wieder in die Einschaltstellung überführt.
